# FASCICULE DE BREVET EUROPEEN

(11) **EP 2 444 677 B1**
(45) Date de publication et mention de la délivrance du brevet: **10.07.2013**
(21) Numéro de dépôt: 11306362.2
(22) Date de dépôt: 21.10.2011
(51) Int. Cl.: F15B 15/19, B64D 1/06

(54) **Actionneur pneumatique d'éjection d'un emport porté par un aéronef et procédé d'éjection associé**
Pneumatischer Stellantrieb zum Auswurf einer von einem Luftfahrzeug transportierten Mitnahmemenge, und entsprechendes Auswurfverfahren
Pneumatic actuator for ejecting a payload carried by an aircraft and related ejection method

(30) Priorité: 22.10.2010 FR 1004160
(43) Date de publication de la demande: 25.04.2012
(73) Titulaire: DASSAULT AVIATION, F-75008 Paris (FR)
(72) Inventeur: Loison, Renaud, 75010 Paris (FR)
(74) Mandataire: Blot, Philippe Robert Emile

(56) Documents cités:
- EP-A1- 1 186 786
- EP-A2- 1 469 205
- DE-A1-102007 014 403
- US-A- 2 749 063

## Description

La présente invention concerne un actionneur pneumatique d'éjection d'un emport porté par un aéronef, comprenant:
- une chemise de guidage;
- au moins un premier organe déployable monté coulissant le long d'un axe de coulissement sur une surface de coulissement définie dans la chemise de guidage, entre une position rétractée et une position déployée d'éjection de l'emport, le premier organe déployable présentant une extrémité amont appliquée sur la surface de coulissement; et
- une source pyrotechnique de gaz d'actionnement raccordée à la chemise de guidage par une ouverture d'entrée, la source pyrotechnique étant activable pour introduire à travers l'ouverture d'entrée un flux de gaz d'actionnement destiné à pousser le premier organe déployable vers sa position déployée.

Un tel actionneur est destiné notamment à éjecter, depuis un aéronef, une charge militaire comme une bombe ou un missile, ou un engin volant tel qu'un drone.

L'actionneur est destiné à éloigner l'emport de l'aéronef en lui fournissant une énergie cinétique suffisante.

Des actionneurs connus comportent une chemise fixée sur l'aéronef et au moins un organe déployable monté coulissant dans la chemise entre une position rétractée et une position déployée d'éjection de l'emport.

Pour déplacer l'organe déployable depuis sa position rétractée vers sa position déployée, une source de gaz d'actionnement est généralement utilisée.

Cette source est par exemple une bouteille de gaz sous pression. Dans ce cas, la bouteille doit être réchauffée pour maintenir des propriétés thermodynamiques satisfaisantes lorsque la température extérieure est faible, notamment en altitude.

L'utilisation d'un réservoir de gaz sous pression n'est donc pas très pratique. En effet, le poids du système est élevé et le gaz présent dans la bouteille présente une pression qui est très sensible à la température extérieure.

Pour pallier ce problème, il est connu d'utiliser des sources pyrotechniques de génération de gaz sous pression, comme par exemple dans le document US 2 749 063.

Ces sources comprennent une charge pyrotechnique propre à se décomposer thermochimiquement pour engendrer très rapidement une grande quantité de gaz. Le gaz produit est distribué dans la chemise pour déployer l'organe mobile.

Les sources pyrotechniques de génération de pression présentent l'avantage d'être relativement légères et peu volumineuses. De plus, la pression du gaz engendré est sensiblement indépendante de la température extérieure de la source.

Toutefois, l'ignition de la source pyrotechnique produit des résidus solides de combustion issus de la décomposition de la charge. Ces résidus sont par exemple des particules carbonées ou métalliques qui sont transportées à travers la chemise lors de l'éjection du gaz sous pression.

Ces actionneurs doivent donc être nettoyés fréquemment. En particulier, les résidus carbonés et métalliques ont tendance à former une pollution adhérente.

En l'absence de nettoyage très efficace, les performances mécaniques des éléments cinématiques, et notamment le déploiement de l'organe mobile s'en trouvent perturbés, compte tenu de l'augmentation artificielle de l'adhérence et du frottement entre les surfaces, notamment par effet tyxotropique.

En outre, des résidus de combustion agglomérés augmentent le risque de vieillissement accéléré par corrosion galvanique entre les résidus métalliques et le métal des surfaces de frottement. En particulier, ces métaux présentent des potentiels électrochimiques différents et peuvent se trouver dans un environnement humide, acide ou basique par exemple dans le milieu marin.

Par suite, les actionneurs du type précité doivent être nettoyés au moins toutes les cinq utilisations, sur une durée maximale d'un mois.

Un but de l'intervention est donc d'obtenir un actionneur pneumatique d'éjection d'un emport qui présente des propriétés d'éjection sensiblement constantes dans le temps, avec une maintenance très simplifiée.

A cet effet, l'invention a pour objet un actionneur du type précité, caractérisé en ce que l'actionneur comporte des moyens de déflection d'au moins une partie du flux de gaz issu de l'ouverture d'entrée vers la surface de coulissement pour plaquer des solides présents dans le flux gazeux contre la surface de coulissement, les moyens de déflection s'étendant au moins en partie longitudinalement en amont de l'extrémité amont du premier organe déployable dans la position déployée.

L'actionneur selon l'invention peut comprendre l'une ou plusieurs des caractéristiques suivantes, prise(s) isolement ou suivant toute combinaison techniquement possible :
- le premier organe déployable comporte une saillie de raclage, de section au moins en partie conjuguée à la section intérieure de la chemise, la saillie de raclage raclant la surface de coulissement lors du ravalement du premier organe déployable depuis sa position déployée vers sa position rétractée ;
- la chemise de guidage et le premier organe déployable définissent un premier espace annulaire obturé en amont par la saillie de raclage et obturé en aval par une butée annulaire solidaire de la chemise de guidage, le volume de l'espace annulaire diminuant lors du passage du premier organe déployable de sa position rétractée vers sa position déployée ;

- le premier organe déployable comporte une bande annulaire de guidage rapportée dans la saillie de raclage, la bande annulaire étant avantageusement réalisée en un matériau de lubrification solide, tel que du PTFE chargé au carbone, ou un métal tel que du bronze ;
- le premier organe déployable définit une première cavité intérieure de réception des résidus solides collectés sur la surface de coulissement et un passage de raccordement raccordant la chambre définie par la surface de coulissement à la première cavité intérieure ;
- les moyens de déflection comprennent une saillie de déflection montée mobile conjointement avec le premier organe déployable, la saillie de déflection présentant au moins une surface de déflection dirigée vers la surface de coulissement ;
- les moyens de déflection comportent une saillie montée fixe dans la chemise, la saillie délimitant une pluralité d'ouvertures transversales d'amenée de gaz d'actionnement débouchant en regard de la surface de coulissement, le premier organe déployable couvrant au moins une première ouverture transversale dans la position rétractée, la première ouverture transversale étant découverte dans la position déployée ;
- les moyens de déflection comportent une pluralité de conduits de guidage débouchant dans la chemise, au moins un des conduits de guidage présentant un axe local incliné ou perpendiculaire à l'axe de coulissement lorsqu'il débouche dans la chemise ;
- les moyens de déflection comprennent une pluralité de conduits de guidage, au moins un des conduits de guidage présentant un axe parallèle et décentré par rapport à l'axe de coulissement pour faire passer les gaz au voisinage de la surface de coulissement ;
- l'actionneur comporte une pluralité d'organes déployables montés coulissants et déployables l'un par rapport à l'autre entre une position rétractée et une position déployée ;
- un dernier des organes déployables délimite une ouverture transversale d'évacuation de résidus, raccordée hydrauliquement à la première cavité intérieure dans la position déployée de chaque organe déployable ;
- le premier organe déployable et la chemise de guidage sont réalisés à base du même matériau ; et
- les moyens de déflection comportent une surface de déflection qui s'étend parallèlement ou de manière inclinée en regard de la surface de coulissement ; et
- la surface de coulissement et la surface extérieure du premier organe déployable présentent une dureté Vickers supérieure à 1000 Vickers, avantageusement supérieure ou égale à 1200 Vickers ;
- l'actionneur comporte une tête de distribution de gaz définissant intérieurement un conduit d'entrée raccordé à la source pyrotechnique et un conduit de sortie raccordé au conduit d'entrée par une chambre intermédiaire, le conduit de sortie débouchant axialement dans la chemise de guidage par l'ouverture d'entrée.

L'invention a également pour objet un procédé d'éjection d'un emport porté par un aéronef, du type comprenant les étapes suivantes :
- fourniture d'un actionneur tel que défini ci-dessus, le premier organe déployable occupant sa position rétractée, un emport étant porté par l'actionneur ;
- activation de la source pyrotechnique de gaz d'actionnement pour engendrer un flux de gaz d'actionnement ;
- introduction du flux de gaz d'actionnement dans la chemise de guidage à travers l'ouverture d'entrée ;
- déflection d'au moins une partie du flux de gaz d'actionnement par les moyens de déflection pour plaquer les résidus solides présents dans le flux de gaz d'actionnement contre la surface de coulissement ;
- déploiement du premier organe déployable depuis sa position rétractée vers sa position déployée ;
- éjection de l'emport.

Le procédé selon l'invention peut comprendre l'une ou plusieurs des caractéristiques suivantes, prise(s) isolément suivant toute(s) combinaison(s) techniquement possible(s) :
- le procédé comporte, après l'étape de déploiement, les étapes suivantes :
   - ravalement du premier organe déployable vers sa position rétractée, l'étape de ravalement comportant le raclage des résidus solides présents sur la surface de coulissement par une saillie de raclage définie par le premier organe déployable ;
   - passage des résidus solides dans une cavité interne définie par le premier organe déployable.
- le procédé comporte, après l'étape de ravalement, les étapes suivantes :
   - activation additionnelle de la source pyrotechnique pour engendrer un flux de gaz d'actionnement du premier organe déployable ;
   - passage du premier organe déployable de sa position rétractée vers sa position déployée ;
   - éjection des résidus solides contenus dans la cavité intérieure vers l'extérieur de l'actionneur.

L'invention sera mieux comprise à la lecture de la description qui va suivre, donnée uniquement à titre d'exemple, et faite en se référant aux dessins annexés, sur lesquels :
- la figure 1 est une vue schématique de côté d'un aéronef équipé d'un actionneur pneumatique selon l'invention ;
- la figure 2 est une vue en coupe, prise suivant un plan vertical médian, de l'actionneur de l'aéronef de la figure 1, dans une configuration rétractée, avant l'activation de la source pyrotechnique ;
- la figure 3 est une vue analogue à la figure 2, juste après l'activation de la source pyrotechnique, dans une première phase d'éjection ;
- la figure 4 est une vue analogue à la figure 3, dans une deuxième phase d'éjection ;
- la figure 5 est une vue analogue à la figure 3, dans une troisième phase d'éjection ;
- la figure 6 est une vue analogue à la figure 3, dans une quatrième phase d'éjection ;
- la figure 7 est une vue analogue à la figure 3, dans une première phase de ravalement ;
- la figure 8 est une vue analogue à la figure 7, dans une deuxième phase de ravalement ;
- la figure 9 est une vue schématique, prise en coupe selon un plan vertical médian, d'un deuxième actionneur selon l'invention ;
- la figure 10 est une vue analogue à la figure 3 du deuxième actionneur selon l'invention ; et
- la figure 11 est une vue analogue à la figure 3 d'un troisième actionneur selon l'invention.

Dans tout ce qui suit, les termes « amont » et « aval » s'entendent par rapport au sens normal de circulation d'un fluide dans un conduit, lors de l'éjection de l'emport.

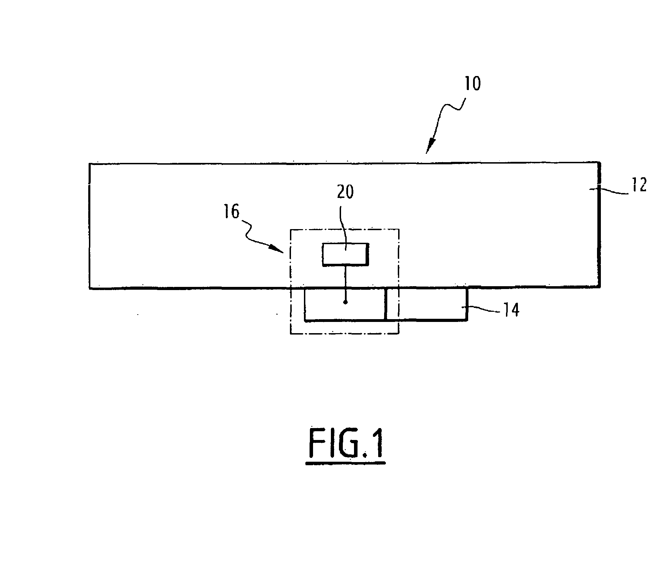

Un aéronef 10 selon l'invention est représenté schématiquement sur la figure 1. Cet aéronef 10 comporte une structure porteuse 12, un emport formé par une charge 14 qui peut être éjectée à partir de la structure 12, et un éjecteur 16 de charge, propre à fournir l'énergie cinétique d'éloignement de la charge 14 à l'écart de la structure porteuse 12.

La charge 14 est par exemple une charge explosive militaire de type bombe ou missile, ou un engin volant tel qu'un drone.

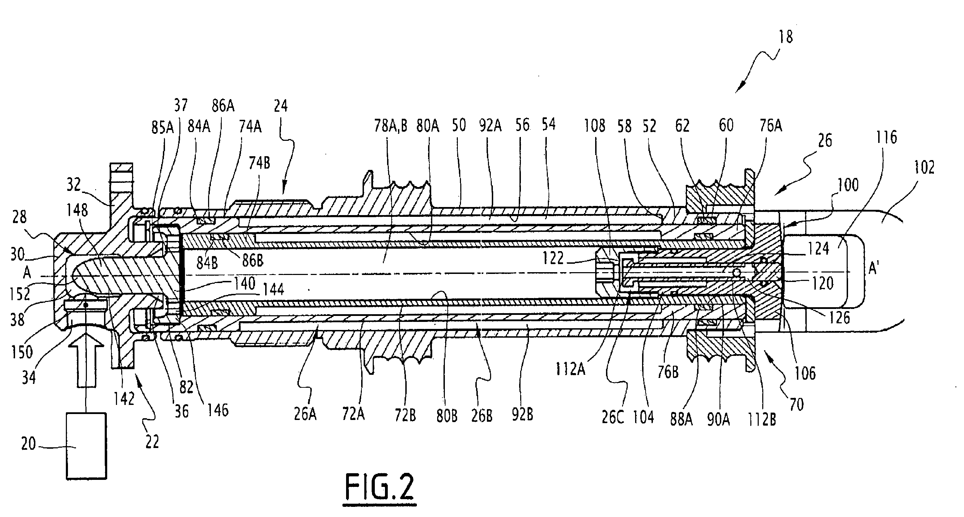

L'éjecteur de charge 16 comporte un premier actionneur pneumatique 18 selon l'invention, représenté en détail sur les figures 2 à 8.

Comme illustré par les figures 1 et 2, l'actionneur 18 comporte une source pyrotechnique 20 d'un gaz d'actionnement, une tête de distribution 22 de gaz, une chemise de guidage 24 et une pluralité d'organes mobiles 26 déployables par rapport à la chemise 24.

Selon l'invention, l'actionneur 18 comporte en outre des moyens 28 de déflection du flux gazeux engendré par la source pyrotechnique 20 vers une surface de coulissement définie par la chemise de guidage 24.

De manière connue, la source pyrotechnique 20 comporte une charge pyrotechnique de génération de gaz et un organe d'ignition de la charge. La charge pyrotechnique est par exemple réalisée à base d'une substance propre à se décomposer thermochimiquement pour engendrer une grande quantité de gaz en un temps faible. Par exemple, un volume de gaz de commande supérieur à 1500 fois le volume de la charge engendré dans un temps par exemple inférieur à 20 ms.

La charge est par exemple réalisée à base d'une poudre simple ou double base, propre à se décomposer thermochimiquement ou toute poudre dite balistique utilisée en combustion.

L'organe d'ignition initie la décomposition thermochimique de la charge sur réception d'un ordre de mise à feu qui peut être électrique, pyrotechnique, mécanique ou optique.

La tête de distribution 22 (également appelée chapeau) est raccordée à la source 20 par l'intermédiaire d'un distributeur (non représenté).

Elle comporte une base creuse 30 et un prisme 32 de fixation de la base creuse 30 sur la structure porteuse 12.

La tête de distribution 22 définit intérieurement un conduit d'entrée 34 raccordé à la source pyrotechnique 20, et un conduit de sortie 36 raccordé au conduit d'entrée 34 par une chambre intermédiaire 38 définissant, dans cet exemple, un coude.

La chambre intermédiaire 38 et le conduit de sortie 36 s'étendent suivant un axe A-A' de déploiement de chaque organe mobile 26.

Le conduit d'entrée 34 débouche transversalement par rapport à l'axe A-A' dans la chambre intermédiaire 38.

Le conduit de sortie 36 présente une région intérieure 40 de diamètre sensiblement constant et une région de sortie 42 évasée. Il débouche axialement dans la chemise de guidage 24 par une ouverture axiale 37.

La chemise de guidage 24 comporte un tronçon amont 50 tubulaire et une butée aval 52. Dans cet exemple, le tronçon amont 50 et la butée 52 sont réalisés d'un seul tenant en étant venus de matière, par exemple en acier inoxydable de type Z8CND1704 ou tout alliage gardant des propriétés de résilience à froid du même ordre que l'alliage précité.

La chemise 24 s'étend coaxialement le long de l'axe A-A'. Elle débouche à son extrémité amont en regard du conduit de sortie 36, à travers la butée aval 52.

Le tronçon amont 50 définit une chambre cylindrique 54 de circulation des organes mobiles 26. La chambre 54 s'étend le long de l'axe A-A'. Elle présente une section transversale supérieure à la section transversale du conduit de sortie 36. Le contour de la section transversale de la chambre 54 est fermé.

La chambre 54 est délimitée extérieurement par une surface cylindrique 56 de coulissement.

La butée aval 52 fait saillie radialement vers l'axe A-A' par rapport à la surface de coulissement 56, à l'extrémité libre du tronçon amont 50.

Elle présente une section transversale intérieure inférieure à la section transversale intérieure de la chambre cylindrique 54, et supérieure à la section transversale intérieure du conduit de sortie 36.

La butée aval 52 délimite un épaulement annulaire 58 de fin de course des organes mobiles 26.

Elle définit une gorge 60 aval qui débouche radialement vers l'axe A-A'. La butée aval 52 porte une première bande de guidage 62 reçue dans la gorge aval 60. La bande de guidage 62 et la gorge aval sont avantageusement annulaires.

La bande de guidage 62 est réalisée à base d'un matériau distinct du matériau constituant la butée aval 52. Ce matériau est propre à fournir une lubrification solide. Il est par exemple formé par du PTFE, notamment du PTFE chargé au carbone sous forme graphite.

La bande de guidage 62 présente un coefficient de frottement sur la surface de coulissement 56 inférieur à 0,15 avant la première pollution de cette surface, telle que mesurée par la norme ASTM D 3702.

En variante, la bande de guidage 62 est réalisée à base de métal, par exemple à base de bronze, de carbone graphite, ou de frittage bronze et souffre.

La bande de guidage 62 affleure sensiblement la surface intérieure de la butée aval 52 autour de la gorge 60.

Dans l'exemple représenté sur les figures 2 à 8, l'actionneur pneumatique 18 est un actionneur multi-étages.

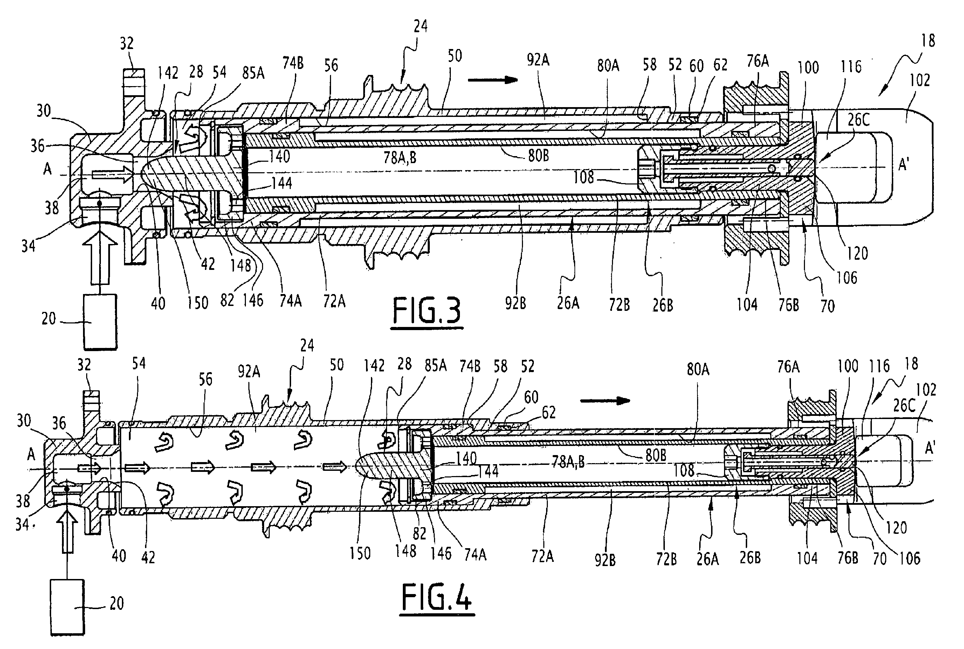

A cet effet, l'actionneur 18 comporte une pluralité d'organes déployables 26A, 26B, 26C déployables. Ainsi, dans l'exemple illustré par la figure 3, l'actionneur 18 comporte un premier organe déployable 26A, monté coulissant dans la chemise 24, un deuxième organe déployable 26B, monté coulissant dans le premier organe déployable 26A, et muni d'une tête 70 à son extrémité libre. Il comporte en outre un troisième organe déployable 26C monté mobile à partir de la tête 70.

Le premier organe déployable 26A comporte un premier tube 72A, une saillie de raclage formée dans cet exemple par un premier collet 74A, et une première butée intérieure 76A aval.

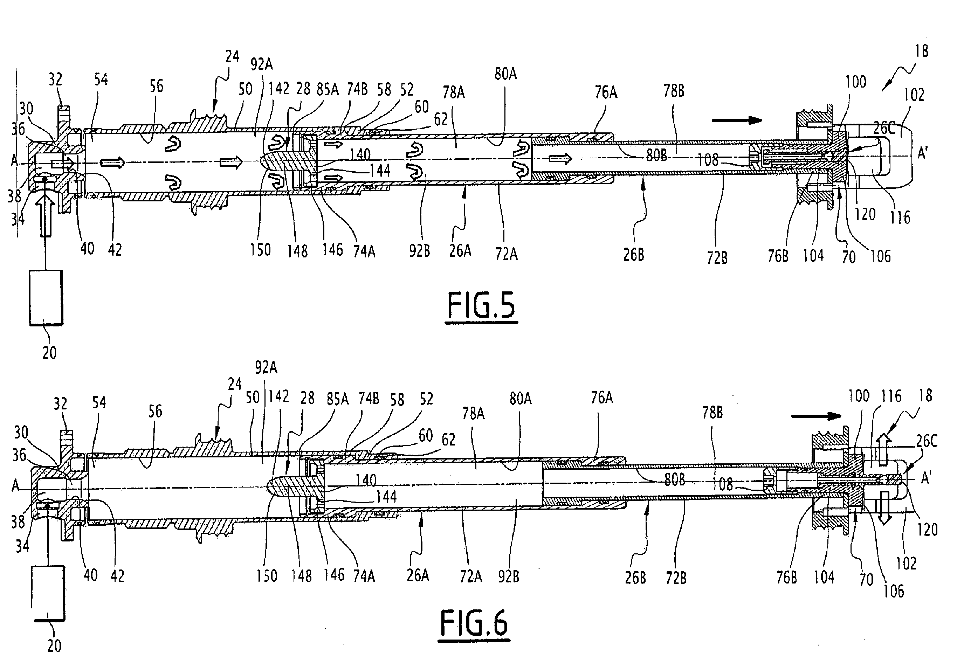

Comme représenté en détails sur les figures 5 et 6, le tube 72A, le collet de raclage 74A et la butée 76A sont réalisés d'un seul tenant en étant venus de matière, avantageusement à partir du même matériau que celui formant la chemise de guidage 24.

Le premier tube 72A présente une section transversale extérieure sensiblement conjuguée à la section transversale intérieure de la butée aval 52 formée dans la chemise 24. Le contour de la section du tube 72A est fermé.

Le tube 72A délimite intérieurement une première cavité interne 78A de réception de résidus, dans laquelle coulisse le deuxième organe mobile 26B. La cavité interne 78A est définie par une surface intérieure 80A cylindrique de coulissement du deuxième organe mobile 26B.

Le premier tube 72A délimite en outre un logement annulaire amont 82, d'étendue radiale supérieure à l'étendue radiale de la première cavité 78A pour la réception des moyens de déflection 28.

Le collet de raclage 74A fait saillie radialement à l'écart de l'axe A-A' par rapport au premier tube 72A. Il présente une section extérieure sensiblement conjuguée à la section intérieure de la chambre cylindrique 54. Il définit une première gorge extérieure amont 84A de forme annulaire.

Le collet de raclage 74A définit une extrémité amont 85A de l'organe déployable 26A qui est appliquée sur la surface de coulissement 56, avantageusement sur plus de 180° autour de l'axe A-A', notamment sur environ 360°.

La première gorge extérieure amont 84A débouche radialement à l'écart de l'axe A-A' vers la surface de coulissement 56. La gorge 84A reçoit une deuxième bande de guidage 86A qui affleure la surface extérieure du collet de raclage 74A. La deuxième bande de guidage 86A est formée du même matériau que la première bande de guidage 62. La gorge 84A et la bande 86A sont avantageusement annulaires.

La première butée intérieure 76A fait saillie radialement vers l'axe A-A' par rapport à la surface de coulissement 80A. Elle délimite une gorge intérieure aval 88A de forme avantageusement annulaire dirigée vers l'axe A-A'. La gorge intérieure aval 88A reçoit une troisième bande 90A analogue à la première bande de guidage 62 et à la deuxième bande de guidage 86A.

Comme on le verra plus bas, le premier organe déployable 26A est monté mobile dans la chemise 24, à coulissement le long de l'axe A-A', entre une position rétractée, représentée sur la figure 2, et une position déployée, représentée sur les figures 4, 5 et 6.

Dans la position rétractée, le premier collet de raclage 74A est situé relativement au voisinage du conduit de sortie 36 et de l'extrémité amont de la chemise 24. L'organe déployable 26A est sensiblement totalement reçu dans la chemise 24.

Le premier collet de raclage 74A est appliqué contre la surface de coulissement 56 au voisinage du conduit de sortie 36, relativement à l'opposé de la butée aval 52.

La butée intérieure aval 76A est située longitudinalement en regard de la butée aval 52. La butée aval 52 est appliquée contre la surface extérieure du premier organe mobile 26A.

Le premier organe mobile 26A et la chemise de guidage 24 délimitent entre eux un premier espace annulaire 92A obturé de manière sensiblement étanche à ses extrémités respectivement par le collet de raclage 74A et par la butée 52, compte tenu notamment de la présence des bandes de guidage 60, 86A.

Dans la position déployée, l'organe déployable 26A a coulissé vers l'aval dans la chambre cylindrique 54 le long de l'axe A-A' pour se déployer hors de la chambre 54.

Dans la position déployée, le collet de raclage 74A s'est éloigné relativement du conduit de sortie 36. Il bute contre la butée aval 52 en étant bloqué longitudinalement le long de l'axe A-A' par l'épaulement 58. La longueur du premier organe 26A déployée hors de la chambre 54 et la distance séparant la butée intérieure aval 74A de la butée aval 52 sont alors maximales.

Le deuxième organe mobile 26B présente une structure analogue à celle du premier organe mobile 26A. Il comporte un deuxième tube 72B, une saillie de raclage formée dans cet exemple par un deuxième collet 74B, et une deuxième butée intérieure 76B aval.

Comme représenté en détails sur les figures 5 et 6, le tube 72B, le collet de raclage 74B et la butée 76B sont réalisés d'un seul tenant en étant venus de matière, avantageusement à partir du même matériau que celui formant le premier organe déployable 26A.

Le deuxième tube 72B présente une section transversale extérieure sensiblement conjuguée à la section transversale intérieure de la butée intérieure 74A.

Il délimite intérieurement une deuxième cavité interne 78B de réception de résidus, dans laquelle est montée la tête 70. La cavité interne 78B est définie par une surface intérieure 80B cylindrique.

Le collet de raclage 74B fait saillie radialement à l'écart de l'axe A-A' par rapport au deuxième tube 72B. Il présente une section extérieure sensiblement conjuguée à la section intérieure de la première cavité interne 78A. Il définit une deuxième gorge extérieure amont 84B de forme avantageusement annulaire.

La gorge extérieure amont 84B débouche radialement à l'écart de l'axe A-A' vers la première surface de coulissement 80A. La gorge 84B reçoit une quatrième bande de guidage 86B qui affleure la surface extérieure du collet de raclage 74B. La quatrième bande de guidage 86B est formée du même matériau que la première bande de guidage 62. Elle est avantageusement annulaire.

La deuxième butée intérieure 76B fait saillie radialement vers l'axe A-A' par rapport à la surface intérieure 80B.

Comme on le verra plus bas, le deuxième organe déployable 26B est monté mobile dans le premier organe déployable 26A, à coulissement le long de l'axe A-A', entre une position rétractée, représentée sur la figure 2, et une position déployée, représentée sur les figures 4, 5 et 6.

Dans la position rétractée, le collet de raclage 74B est situé relativement au voisinage du conduit de sortie 36. Le deuxième organe déployable 26B est sensiblement totalement reçu dans le premier organe déployable 26A.

Le deuxième collet de raclage 74B est appliqué contre la surface de coulissement 80A au voisinage du conduit de sortie 36, relativement à l'écart de la butée intérieure aval 76A.

La deuxième butée intérieure aval 76B est située longitudinalement en regard de la première butée intérieure aval 76A. La première butée intérieure aval 76A est appliquée contre la surface extérieure du deuxième organe mobile 76B.

Le premier organe mobile 26A et le deuxième organe mobile 76B délimitent entre eux un deuxième espace annulaire 92B obturé de manière sensiblement étanche à ses extrémités respectivement par le collet de raclage 74B et par la butée 76A.

Dans la position déployée, le deuxième organe déployable 26B a coulissé dans la cavité intérieure 78A le long de l'axe A-A' pour se déployer hors de cette cavité 78A.

Dans la position déployée, le collet de raclage 74B s'est éloigné relativement du conduit de sortie 36. Le collet 74B bute contre la butée intérieure aval 76A en étant bloqué longitudinalement le long de l'axe A-A'. La longueur du deuxième organe 26B déployée hors du premier organe déployable 26A et la distance séparant la deuxième butée intérieure aval 76B de la première butée intérieure aval 76A sont alors maximales.

Dans l'exemple représenté sur les figures 5 et 6, la tête 70 comporte un corps 100 de guidage du troisième organe mobile 26C et un organe extérieur 102 de liaison avec l'emport 14.

Le corps de guidage 100 comprend un manchon cylindrique 104 inséré à une extrémité distale du deuxième organe mobile 26B, une collerette d'appui 106 et de montage de l'organe de liaison 102 et un chapeau de fixation 108 du manchon 104.

Le manchon 104 définit intérieurement un canal de guidage 110 de l'organe 26C. Le canal 110 comprend un tronçon amont 112A et un tronçon aval 112B présentant un diamètre inférieur à celui du tronçon amont 112A.

La collerette 106 fixe l'organe de liaison 102 à l'extrémité libre du deuxième organe 26B.

Le chapeau de fixation 108 bloque en position axiale le manchon 104 en prenant appui sur la deuxième butée distale 76B.

L'organe de liaison 102 définit un espace intérieur d'évacuation de gaz 116 débouchant à l'extérieur de l'actionneur 18.

Le troisième organe mobile 26C est formé par un doigt creux 120 monté coulissant dans le canal 110. Le doigt 120 présente une collerette amont de retenue 122, de diamètre inférieur au diamètre du tronçon amont 112A et de diamètre supérieur au diamètre du tronçon aval 112B.

Le doigt 120 définit une lumière intérieure 124 débouchant axialement en amont dans la deuxième cavité 78B et transversalement en aval par des ouvertures d'évacuation de gaz 126.

Comme illustré par les figures 5 et 6, le troisième organe déployable 26C est déployable par rapport au deuxième organe déployable 26B entre une position de confinement des gaz dans la cavité intérieure 78B, représentée sur la figure 5 et une position d'évacuation des gaz hors de la cavité intérieure 78B, représentée sur la figure 6.

Dans la position de confinement, les ouvertures transversales 126 sont rétractées à l'intérieur du manchon 104. La collerette 122 amont est située à l'écart de l'épaulement défini entre le tronçon aval 112A et le tronçon amont 112B.

Au contraire, dans la position d'évacuation, le doigt 120 fait saillie hors du manchon 104. Les ouvertures transversales 126 débouchent latéralement dans l'espace 116 pour permettre l'évacuation libre des gaz contenus dans le volume 78B.

La collerette 122 est appliquée contre le manchon 104 sur l'épaulement défini par le tronçon amont 112A et le tronçon aval 112B.

Ainsi, lorsque le premier organe déployable 26A occupe sa position rétractée dans la chemise 24, le deuxième organe déployable 26B occupe sa position rétractée dans le premier organe mobile 26A, et lorsque le troisième organe mobile 26C occupe sa position de confinement, l'actionneur 18 est dans une configuration totalement rétractée de repos, dans laquelle il présente une longueur minimale.

Au contraire, lorsque le premier organe mobile 26A occupe sa position déployée par rapport à la chemise de guidage 24, le deuxième organe mobile 26B occupe sa position déployée par rapport au premier organe mobile 26A et lorsque le troisième organe mobile 26C occupe sa position d'évacuation des gaz, l'actionneur 18 est dans une configuration totalement déployée représentée sur la figure 6, dans laquelle il présente une longueur maximale.

Dans le premier mode de réalisation représenté sur les figures 1 à 8, les moyens de déflection 28 sont formés par un organe monté mobile conjointement avec le premier organe mobile 26A.

Dans l'exemple représenté, les moyens de déflection 28 comprennent une base 140 reçue dans le logement annulaire 82 ménagé à l'extrémité amont de l'organe mobile 26A et une saillie de déflection 142 conformée pour diriger le flux gazeux issu du conduit de sortie 36 vers la surface de coulissement 56 définie dans le chemise de guidage 24.

La base 140 obture sensiblement vers l'amont la première cavité intérieure 78A définie par le premier organe mobile 26A. Elle définit des passages axiaux 144 de communication entre la chambre cylindrique 54 et la première cavité intérieure 78A. La base 140 définit à sa périphérie une jupe extérieure 146 appliquée contre l'organe déployable 26A dans le logement 82.

La saillie de déflection 142 présente un tronçon aval 148 sensiblement cylindrique d'axe A-A' et un tronçon amont 150 convergent vers une extrémité libre 152 arrondie. Le tronçon aval 148 et le tronçon amont 150 définissent ainsi une surface extérieure orientée en regard de la surface de coulissement 56 de la chambre cylindrique 54, à l'écart radialement de cette surface 56.

La saillie 142 dépasse longitudinalement en amont de l'extrémité amont 85A du premier organe déployable 26A

Ainsi, lorsqu'un flux axial de gaz provenant du conduit de sortie 36 à travers l'ouverture 37 entre en contact avec la saillie de déflection 142, les gaz sont dirigés vers la surface de coulissement 56 en formant des recirculations et éventuellement des tourbillons entre la saillie de déflection 142 et la surface de coulissement 56 en regard.

Dans cet exemple, et comme on l'a décrit plus haut, les moyens de déflection 28 sont mobiles conjointement avec le premier organe mobile 26A.

Dans la position rétractée de l'organe 26A, la base 30 est située relativement au voisinage de la sortie du conduit de sortie 36, quasiment au contact de la tête de distribution 22. La saillie de déflection 142 est reçue de manière complémentaire dans la chambre intermédiaire 38 et dans le conduit de sortie 36 qu'elle obture sensiblement de manière étanche dans la région amont 40.

Dans la position déployée, la base 140 et la saillie de déflection 142 se sont éloignées à l'écart du conduit de sortie 36 et sont situées dans la chambre 54 au voisinage de la butée aval 52. La saillie de déflection 142 fait saillie axialement vers l'amont le long de l'axe A-A' dans la chambre 54 au-delà de l'extrémité amont 85A du premier organe déployable 26A.

Ainsi, d'une manière générale, les moyens de déflection 28 s'étendent longitudinalement en amont de l'extrémité amont 85A du premier organe déployable 26A dans la position déployée. Dans cette position, ils s'étendent également longitudinalement en regard de la surface de coulissement 56 balayée par l'organe déployable 26A, lors de son passage de la position rétractée à la position déployée.

Le fonctionnement du premier actionneur 18 selon l'invention va maintenant être décrit.

Initialement, l'emport 14 est monté sur l'aéronef 10 en étant raccordé à l'organe de liaison 102 porté par la tête 70. L'actionneur 18 occupe sa configuration totalement rétractée décrite en détail plus haut et représentée sur la figure 2.

Lorsqu'un ordre de commande, émis par exemple par un occupant de l'aéronef 10 ou depuis le sol, est transmis à la source pyrotechnique 20, l'organe d'ignition déclenche la décomposition thermochimique de la charge contenue dans la source pyrotechnique 20.

Un flux de gaz de poussée est alors engendré dans la source pyrotechnique 20, puis est transmis jusqu'à la tête de distribution 22 par l'intermédiaire du distributeur (non représenté).

Le flux peut comprendre un certain nombre de résidus de combustion sous forme de particules solides, issus de la décomposition des produits pyrotechniques. La quantité de résidus est par exemple de l'ordre de 10 % en volume.

Le flux gazeux sous pression pénètre alors successivement dans le conduit d'entrée 34, puis dans la chambre intermédiaire 38. Il s'applique alors sur la saillie de déflection 142 pour pousser le premier organe mobile 26A.

Comme illustré par la figure 3, la poussée du flux gazeux engendre le déplacement du premier organe mobile 26A par coulissement dans la chemise de guidage 24 vers sa position déployée.

Comme illustré par la figure 3, le flux gazeux circule en étant guidé sur la surface extérieure de la saillie de déflection 142 en passant successivement autour du tronçon amont 150, puis autour du tronçon aval 148.

Le flux gazeux est alors projeté transversalement par rapport à l'axe A-A' contre la surface de coulissement 56 définissant la chambre cylindrique 54 sur la chemise de guidage 24. La chemise 24 étant maintenue à température ambiante, les résidus solides et les particules polluantes chaudes se solidifient au contact de la chemise froide.

Lors du déploiement du premier organe 26A jusqu'à la position déployée, la présence de la saillie de déflection 142 engendre avantageusement des vortex toriques de recirculation dirigeant l'ensemble des particules solides chaudes vers la surface de coulissement 56 relativement plus froide. La différence de température entre les gaz chauds et la surface de coulissement 56 froide est par exemple supérieure à 200°C.

Lors de ce déplacement, l'espace annulaire 92A disponible entre l'épaulement 58 sur la butée aval 52 et le collet de raclage 74A diminue progressivement.

Compte tenu de l'étanchéité partielle réalisée par les bandes de guidage 62, 86A, le déplacement de l'organe 26A s'effectue de manière contrôlée, ce qui atténue notablement le choc lorsque la butée aval 52 entre en contact avec le collet de raclage 74A.

Lorsque le premier organe mobile 26A atteint sa position déployée, le premier collet 74A bute contre la butée aval 52, comme représenté sur la figure 4.

Le flux gazeux sous pression pénètre alors dans les passages 144 et pousse le deuxième organe mobile 26B vers sa position déployée.

Comme illustré par la figure 5, le deuxième organe mobile 26B se déploie alors par rapport au premier organe mobile 26A. La présence des passages 144 situés à la périphérie de la base 30 en étant décalés axialement par rapport à l'axe A-A', permet au flux de gaz traversant ces passages de passer à proximité des parois « froides » (par rapport à la température du gaz) de l'éjecteur. Cette mise au contact du gaz « chaud » avec les parois « froides » a pour effet d'engendrer au sein du flux de gaz des vortex qui tendent à plaquer les particules solides présentes dans le flux gazeux contre la surface interne de coulissement 80A définie par le premier organe mobile 26A.

Lorsque le deuxième organe mobile 26B atteint sa position déployée, les gaz sous pression pénètrent dans la lumière 124, ce qui provoque le passage du troisième organe mobile 26C depuis sa position de confinement vers sa position d'évacuation. Comme illustré par la Figure 6, lorsque la collerette 122 bute contre le manchon 104, les ouvertures transversales 126 sont libérées, et le flux gazeux s'évacue latéralement à travers ces ouvertures 126.

L'emport 14 est alors éjecté à l'écart de l'actionneur 18 et de l'aéronef 10.

Ensuite, le ravalement de l'actionneur 18 vers sa configuration totalement rétractée est effectué.

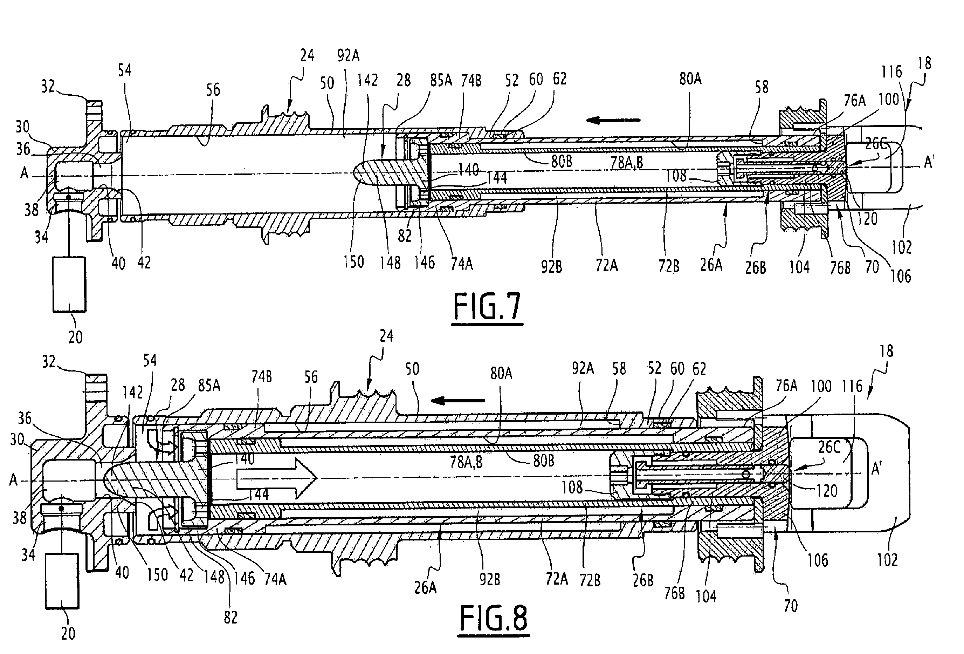

Dans un premier temps, le troisième organe mobile 26C est rétracté sans sa position de confinement, comme représenté sur la Figure 7.

Puis, le deuxième organe mobile 26B est ramené en translation le long de l'axe A-A' vers sa position rétractée. Lors de ce déplacement, les particules solides déposées sur la surface intérieure 80A sont raclées par le deuxième collet 74B et se déposent dans la deuxième cavité interne 78B.

Ensuite, comme représenté sur la Figure 8, le premier organe mobile 26A contenant le deuxième organe mobile 26B est déplacé vers sa position rétractée. Lors de ce déplacement, le premier collet de raclage 74A racle la surface de coulissement 56 définie à l'intérieur de la chemise de guidage 24, ce qui provoque le détachement des particules solides agglomérées sur cette surface 56. Ces particules en se détachant de la surface passent dans la première cavité interne 78A, et passent ensuite, au cours du ravalement de l'actionneur, dans la deuxième cavité interne 78B à travers les passages 144.

Les moyens de déflection 28 permettent donc de diriger de manière particulièrement efficace les particules solides contenues dans le flux gazeux vers les surfaces froides 56, 80A définies respectivement par la chemise de guidage 24 et par le premier organe mobile 16A.

Le raclage ultérieur de ces surfaces respectivement par le premier collet de raclage 74A et par le deuxième collet de raclage 74B détache les résidus collectés, afin d'éviter l'encrassement des surfaces 80A, 56.

Le nettoyage de ces surfaces de coulissement étant réalisé après chaque déploiement de l'actionneur 18, les performances mécaniques de l'actionneur 18 restent sensiblement constantes sur un grand nombre de déploiements, notamment pour 50 utilisations sans nettoyage sur une durée de 3 mois.

En outre, le risque de vieillissement accéléré par corrosion galvanique est supprimé, puisque les résidus mécaniques métalliques présents dans les résidus de combustion sont éliminés des surfaces correspondantes.

La présence des bandes de guidage 62, 86A, 90A, 86B permet en outre d'assurer une bonne lubrification solide des différents organes montés mobiles les uns par rapport aux autres.

Une fois l'actionneur 18 placé dans sa configuration totalement rétractée, l'ensemble des particules solides collectées est alors disposé dans la deuxième cavité interne 78B définie au sein de la première cavité interne 78A.

Lors d'un déploiement ultérieur de l'actionneur 18, les gaz de poussée pénétrant dans la cavité interne 78B lors du déploiement du deuxième organe mobile 26B, provoquant le déploiement vers la position d'évacuation du troisième organe mobile 26C, entraînent simultanément les résidus solides présents vers l'extérieur de l'actionneur 18.

La pollution solide collectée lors du ravalement de l'actionneur 18 est donc évacuée naturellement à l'extérieur de celui-ci, ce qui limite l'encrassement global du système et les risques de corrosion galvanique par présence de plusieurs espèces à potentiels électro-chimiques différents dans un milieu acide, basique ou aqueux.

En outre, la présence d'espaces annulaires d'étanchéité contrôlée 92A, 92B respectivement entre la chemise de guidage 24 et le premier organe mobile 26A, et entre le premier organe mobile 26A et le deuxième organe mobile 26B limite la contre-réaction et le choc transmis à la structure porteuse 12 de l'aéronef 10 lors d'une éjection d'un emport 14.

Dans une variante (non représentée), l'actionneur 18 est de type mono-étage. Dans ce cas, la tête 70 est disposée à l'extrémité libre du premier organe mobile 16A.

Le fonctionnement de l'actionneur 18 est par ailleurs identique à celui du premier actionneur 18.

Dans une autre variante (non représentée), le nombre d'étages est supérieur à 2, c'est-à-dire que l'actionneur 18 comporte au moins trois organes mobiles 26 de structures analogues, montés coulissant les uns dans les autres.

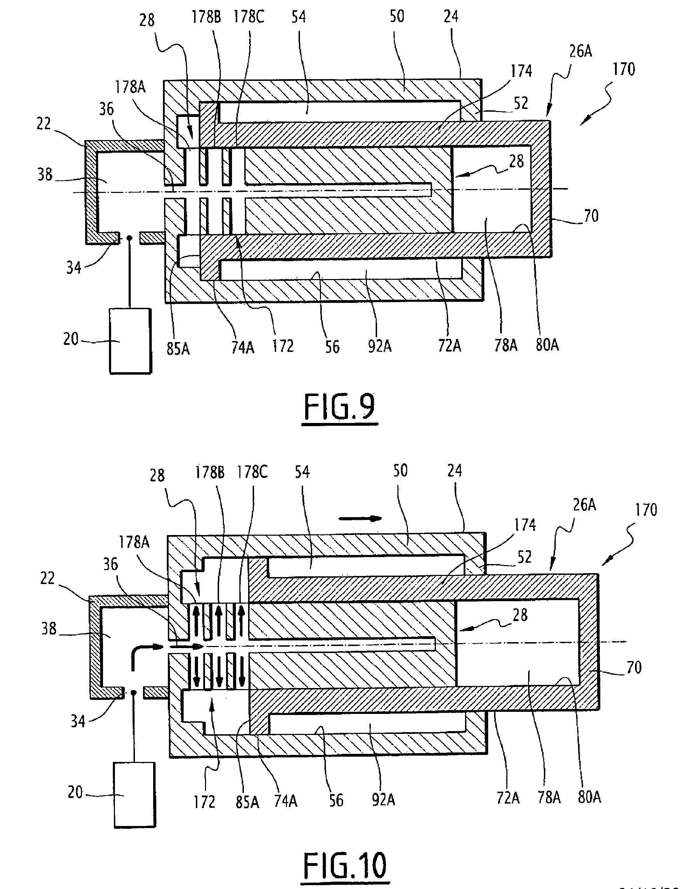

Un deuxième actionneur 170 est représenté de manière schématique sur les figures 9 et 10. A la différence du premier actionneur 18, les moyens de déflection 28 sont formés par une saillie de déflection 172 montée fixe dans la chambre 54 définie par la chemise de coulissement 24.

La saillie 172 est montée coaxialement le long de l'axe A-A' à partir de la tête de distribution 22. Elle présente une surface extérieure de guidage cylindrique 174 de forme complémentaire à la cavité intérieure 78A définie par l'organe mobile 26A.

La saillie 172 définit intérieurement un canal central 176 raccordé au conduit de sortie 36 et une pluralité de canaux transversaux 178A, 178B, 178C débouchant transversalement en amont dans le canal central 176 et en aval dans la chambre 54.

Ainsi, les canaux 178A, 178B, 178C débouchent en regard de la surface de coulissement 56 en étant espacés longitudinalement le long de l'axe A-A'.

Le premier organe mobile 26A est monté mobile en translation le long de l'axe A-A', à coulissement sur la surface extérieure 174 entre sa position rétractée et sa position déployée. Comme précédemment, le premier collet de raclage 74A est monté mobile à coulissement sur la surface de coulissement 56 dans la chambre 54.

Dans la position rétractée, représentée sur la figure 9, au moins un canal transversal 178A présente une ouverture de sortie découverte, alors qu'au moins un canal transversal 178B, 178C est obturé par l'organe mobile 26A.

Lors du passage de l'organe mobile 26A entre la position rétractée et la position déployée, les canaux transversaux 178B, 178C qui sont obturés dans la position rétractée se dégagent successivement, ce qui provoque des tourbillons et des vortex susceptibles d'appliquer les particules solides chaudes contenues dans le flux gazeux sur la surface de coulissement 56 froide, comme décrit précédemment.

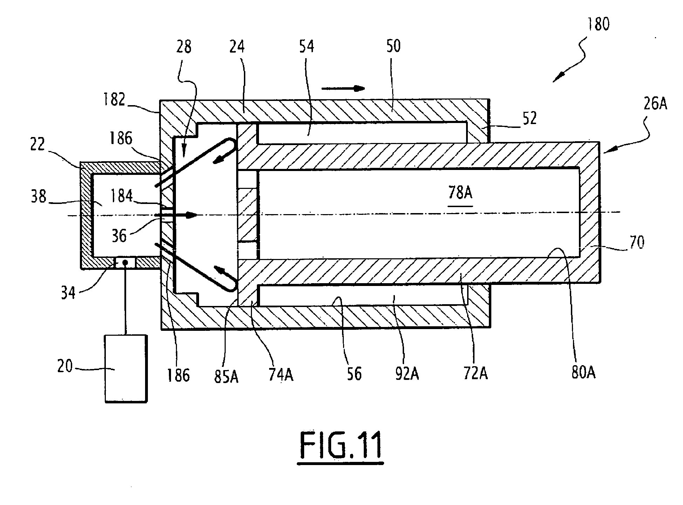

Un troisième actionneur 180 selon l'invention est représenté sur la figure 11. A la différence du premier actionneur 18, la chemise 24 délimite une paroi transversale amont 182. La paroi amont définit un conduit de guidage axial 34 des gaz issus de la chemise 24 et des conduits de guidage inclinés 186 par rapport à l'axe A-A' qui sont situés à l'écart radialement de l'axe A-A'.

L'axe des conduits 186 est incliné par rapport à l'axe A-A' par exemple d'un angle supérieur à 15°.

Le flux gazeux passant par les conduits 186 provoque des recirculations et des vortex et est dirigé principalement vers la surface 56.

Dans tous les modes de réalisation décrits précédemment, la surface de coulissement 56, et les surfaces extérieures et intérieures des organes 26A, 26B peuvent être avantageusement traitées pour présenter une dureté de surface supérieure à 1000 Vickers et notamment de l'ordre de 1200 Vickers, soit 12 GPa.

Ce traitement à été effectué par exemple par dépôt de plasma sous vide de type DLC (Diamond Like Carbon) pour former un dépôt de carbone adamantin.

En variante, tout traitement de durcissement de surface permettant d'obtenir une dureté de surface supérieure à 600 Vickers est envisageable (par exemple par bichromatage cuivre + chrome ou par choix d'un autre couple de matériaux résistant au milieu acido/basique).

## Revendications

1. Actionneur (18 ; 170 ; 180) pneumatique d'éjection d'un emport (14) porté par un aéronef (10), comprenant :
- une chemise de guidage (24) ;
- au moins un premier organe déployable (26A) monté coulissant le long d'un axe (A-A') de coulissement sur une surface de coulissement (56) définie dans la chemise de guidage (24), entre une position rétractée et une position déployée d'éjection de l'emport, le premier organe déployable (26A) présentant une extrémité amont (85A) appliquée sur la surface de coulissement (56) ;
- une source pyrotechnique (20) de gaz d'actionnement raccordée à la chemise de guidage (24) par une ouverture d'entrée (37), la source pyrotechnique (20) étant activable pour introduire à travers l'ouverture d'entrée (37) un flux de gaz d'actionnement destiné à pousser le premier organe déployable vers sa position déployée ;
**caractérisé en ce que** l'actionneur (18) comporte des moyens (28) de déflection d'au moins une partie du flux de gaz issu de l'ouverture d'entrée (37) vers la surface de coulissement (56) pour plaquer des solides présents dans le flux gazeux contre la surface de coulissement (56), les moyens de déflection (28) s'étendant au moins en partie longitudinalement en amont de l'extrémité amont (85A) du premier organe déployable (26A) dans la position déployée.

2. Actionneur (18 ; 170 ; 180) selon la revendication 1, **caractérisé en ce que** le premier organe déployable (26A) comporte une saillie de raclage (74A), de section au moins en partie conjuguée à la section intérieure de la chemise (24), la saillie de raclage (74A) raclant la surface de coulissement (56) lors du ravalement du premier organe déployable (26A) depuis sa position déployée vers sa position rétractée.

3. Actionneur (18 ; 170 ; 180) selon la revendication 2, **caractérisé en ce que** la chemise de guidage (24) et le premier organe déployable (26A) définissent un premier espace annulaire (92A) obturé en amont par la saillie de raclage (74A) et obturé en aval par une butée annulaire (52) solidaire de la chemise de guidage (24), le volume de l'espace annulaire (92A) diminuant lors du passage du premier organe déployable (26A) de sa position rétractée vers sa position déployée.

4. Actionneur (18 ; 170 ; 180) selon l'une quelconque des revendications précédentes, **caractérisé en ce que** le premier organe déployable (26A) comporte une bande annulaire de guidage (86A) rapportée dans la saillie de raclage (74A), la bande annulaire (86A) étant avantageusement réalisée en un matériau de lubrification solide, tel que du PTFE chargé au carbone, ou un métal tel que du bronze.

5. Actionneur (18 ; 170 ; 180) selon l'une quelconque des revendications précédentes, **caractérisé en ce que** le premier organe déployable (26A) définit une première cavité intérieure (78A) de réception des résidus solides collectés sur la surface de coulissement (56) et un passage de raccordement (144) raccordant la chambre (54) définie par la surface de coulissement (56) à la première cavité intérieure (78A).

6. Actionneur (18) selon l'une quelconque des revendications précédentes, **caractérisé en ce que** les moyens de déflection (28) comprennent une saillie de déflection (142) montée mobile conjointement avec le premier organe déployable (26A), la saillie de déflection (142) présentant au moins une surface de déflection dirigée vers la surface de coulissement (56).

7. Actionneur (170) selon l'une quelconque des revendications 1 à 5, **caractérisé en ce que** les moyens de déflection (28) comportent une saillie (172) montée fixe dans la chemise (24), la saillie (172) délimitant une pluralité d'ouvertures transversales d'amenée de gaz d'actionnement débouchant en regard de la surface de coulissement (56), le premier organe déployable (26A) couvrant au moins une première ouverture transversale dans la position rétractée, la première ouverture transversale étant découverte dans la position déployée.

8. Actionneur (180) selon l'une quelconque des revendications 1 à 5, **caractérisé en ce que** les moyens de déflection comportent une pluralité de conduits de guidage (186) débouchant dans la chemise (26), au moins un des conduits de guidage (186) présentant un axe local incliné ou perpendiculaire à l'axe de coulissement (A-A') lorsqu'il débouche dans la chemise (26).

9. Actionneur (18) selon l'une quelconque des revendications 1 à 5, **caractérisé en ce que** les moyens de déflection (28) comprennent une pluralité de conduits de guidage, au moins un des conduits de guidage présentant un axe parallèle et décentré par rapport à l'axe de coulissement pour faire passer les gaz au voisinage de la surface de coulissement.

10. Actionneur (18) selon l'une quelconque des revendications précédentes, **caractérisé en ce qu'**il comporte une pluralité d'organes déployables (26A, 26B, 26C) montés coulissants et déployables l'un par rapport à l'autre entre une position rétractée et une position déployée.

11. Actionneur (18) selon la revendication 10, **caractérisé en ce qu'**un dernier des organes déployables (26C) délimite une ouverture transversale (126) d'évacuation de résidus, raccordée hydrauliquement à la première cavité intérieure (78A) dans la position déployée de chaque organe déployable (26A, 26B, 26C).

12. Actionneur (18 ; 170 ; 180) selon l'une quelconque des revendications précédentes, **caractérisé en ce que** le premier organe déployable (26A) et la chemise de guidage (24) sont réalisés à base du même matériau.

13. Actionneur (18) selon l'une quelconque des revendications précédentes, **caractérisé en ce que** la surface de coulissement (56) et la surface extérieure du premier organe déployable (26A) présentent une dureté Vickers supérieure à 1000 Vickers, avantageusement supérieure ou égale à 1200 Vickers.

14. Procédé d'éjection d'un emport (14) porté par un aéronef (10), du type comprenant les étapes suivantes :
- fourniture d'un actionneur (18) selon l'une quelconque des revendications précédentes, le premier organe déployable (26A) occupant sa position rétractée, un emport (14) étant porté par l'actionneur ;
- activation de la source pyrotechnique (20) de gaz d'actionnement pour engendrer un flux de gaz d'actionnement ;
- introduction du flux de gaz d'actionnement dans la chemise de guidage (24) à travers l'ouverture d'entrée (37) ;
- déflection d'au moins une partie du flux de gaz d'actionnement par les moyens de déflection (28) pour plaquer les résidus solides présents dans le flux de gaz d'actionnement contre la surface de coulissement (56) ;
- déploiement du premier organe déployable (26A) depuis sa position rétractée vers sa position déployée ;
- éjection de l'emport (14).

15. Procédé selon la revendication 14, **caractérisé en ce qu'**il comporte, après l'étape de déploiement, les étapes suivantes :
- ravalement du premier organe déployable (26A) vers sa position rétractée, l'étape de ravalement comportant le raclage des résidus solides présents sur la surface de coulissement (56) par une saillie de raclage (74A) définie par le premier organe déployable (26A) ;
- passage des résidus solides dans une cavité interne (78A) définie par le premier organe déployable (26A).

16. Procédé selon la revendication 15, **caractérisé en ce qu'**il comporte, après l'étape de ravalement, les étapes suivantes :
- activation additionnelle de la source pyrotechnique (20) pour engendrer un flux de gaz d'actionnement du premier organe déployable (26A) ;
- passage du premier organe déployable (26A) de sa position rétractée vers sa position déployée ;
- éjection des résidus solides contenus dans la cavité intérieure (78A) vers l'extérieur de l'actionneur (18).

## Patentansprüche

1. Pneumatischer Stellantrieb (18; 170; 180) zum Auswurf einer Ladung (14), welche von einem Luftfahrzeug (10) getragen wird, aufweisend:
eine Führungsbuchse (24);
mindestens eine erste ausfahrbare Baueinheit (26A), welche entlang einer Verschiebeachse (A-A') auf einer in der Führungsbuchse (24) definierten Gleitfläche (56) verschiebbar zwischen einer eingefahrenen Position und einer ausgefahrenen Position des Auswurfs der Ladung montiert ist, wobei die erste ausfahrbare Baueinheit (26a) ein oberes Ende (85A) aufweist, welches an der Gleitfläche (56) anliegt;
eine pyrotechnische Antriebsgasquelle (20), welche mit der Führungsbuchse (24) mittels einer Eintrittsöffnung (37) verbunden ist, wobei die pyrotechnische Quelle (20) aktivierbar ist, um durch die Eintrittsöffnung (37) einen Antriebsgasstrom einzuführen, welcher dazu bestimmt ist, die erste ausfahrbare Baueinheit zu ihrer ausgefahrenen Position hin zu drücken;
**dadurch gekennzeichnet, dass** der Antrieb (18) Mittel (28) zur Ableitung mindestens eines Teils des aus der Eintrittsöffnung (37) stammenden Gasflusses zur Gleitfläche (56) hin aufweist, um Feststoffe, welche im gasförmigen Strom vorhanden sind, gegen die Gleitfläche (56) zu pressen, wobei die Ableitungsmittel (28) sich in der ausgefahrenen Position mindestens teilweise longitudinal vor dem Vorderende (85A) der ersten ausfahrbaren Baueinheit (26A) erstrecken.

2. Pneumatischer Stellantrieb (18; 170; 180) gemäß Anspruch 1, **dadurch gekennzeichnet, dass** die erste ausfahrbare Baueinheit (26A) einen Schabevorsprung (74A) aufweist, dessen Querschnitt mindestens teilweise mit einem Innenquerschnitt der Buchse (24) gekoppelt ist, wobei der Schabevorsprung (74A) die Gleitfläche (56) während eines Reinigens der ersten ausfahrbaren Baueinheit (26A) von ihrer ausgefahrenen Position hin zu ihrer eingefahrenen Position abschabt.

3. Pneumatischer Stellantrieb (18; 170; 180) gemäß Anspruch 2, **dadurch gekennzeichnet, dass** die Führungsbuchse (24) und die erste ausfahrbare Baueinheit (26A) einen ersten ringförmigen Raum (92A) definieren, welcher vorne durch den Schabevorsprung (74A) verschlossen ist, und hinten durch einen ringförmigen Begrenzer (52) verschlossen ist, welcher mit der Führungsbuchse (24) zusammenhält, wobei das Volumen des ringförmigen Raums (92A) während des Gangs der ersten ausfahrbaren Baueinheit (26A) von ihrer eingefahrenen Position hin zu ihrer ausgefahrenen Position abnimmt.

4. Pneumatischer Stellantrieb (18; 170; 180) gemäß einem der vorhergehenden Ansprüche, **dadurch gekennzeichnet, dass** die erste ausfahrbare Baueinheit (26A) ein ringförmiges Führungsband (86A) aufweist, welches in dem Schabevorsprung (74A) angebracht ist, wobei das ringförmige Band (86A) vorteilhaft aus einem festen Schmiermittel hergestellt ist, wie zum Beispiel aus mit Kohlenstoff versetztem PTFE oder einem Metall wie zum Beispiel Bronze.

5. Pneumatischer Stellantrieb (18; 170; 180) gemäß einem der vorhergehenden Ansprüche, **dadurch gekennzeichnet, dass** die erste ausfahrbare Baueinheit (26A) einen ersten inneren Hohlraum (78A) zur Aufnahme der festen Rückstände, welche auf der Gleitfläche (56) gesammelt wurden, und einen Verbindungsdurchgang (144), welcher die durch die Gleitfläche (56) definierte Kammer (54) mit dem ersten inneren Hohlraum (78A) verbindet, definiert.

6. Pneumatischer Stellantrieb (18; 170; 180) gemäß einem der vorhergehenden Ansprüche, **dadurch gekennzeichnet, dass** die Ableitungsmittel (28) einen Ableitvorsprung (142) aufweisen, welcher bewegbar zusammen mit der ersten ausfahrbaren Baueinheit (26A) montiert ist, wobei der Ableitvorsprung (142) mindestens eine Ableitfläche aufweist, welche zur Gleitfläche (56) hin gerichtet ist.

7. Pneumatischer Stellantrieb (18; 170; 180) gemäß einem der Ansprüche 1 bis 5, **dadurch gekennzeichnet, dass** die Ableitungsmittel (28) einen Vorsprung (172) aufweisen, welcher fest in der Buchse montiert ist, wobei der Vorsprung (172) eine Mehrzahl von Queröffnungen für eine Zuführung des Antriebsgases begrenzt, welche sich gegenüber der Gleitfläche (56) öffnen, wobei die erste ausfahrbare Baueinheit (26A) in der eingefahrenen Position mindestens eine erste Queröffnung bedeckt und wobei die erste Queröffnung in der ausgefahrenen Position freigelegt ist.

8. Pneumatischer Stellantrieb (18; 170; 180) gemäß einem der Ansprüche 1 bis 5, **dadurch gekennzeichnet, dass** die Ableitungsmittel eine Mehrzahl von Führungskanälen (186) aufweisen, welche in die Buchse (26) einmünden, wobei mindestens einer der Führungsgänge (186) eine lokale Achse aufweist, welche, wenn sie in die Buchse (26) einmündet, zur Verschiebeachse (A-A') geneigt oder senkrecht ist.

9. Pneumatischer Stellantrieb (18; 170; 180) gemäß einem der Ansprüche 1 bis 5, **dadurch gekennzeichnet, dass** die Ableitungsmittel (28) eine Mehrzahl von Führungskanälen aufweisen, wobei mindestens einer der Führungskanäle eine Achse aufweist, welche gegenüber der Verschiebeachse parallel und dezentriert ist, um die Gase in der Nähe der Gleitfläche vorbeiströmen zu lassen.

10. Pneumatischer Stellantrieb (18; 170; 180) gemäß einem der vorhergehenden Ansprüche, **dadurch gekennzeichnet, dass** er eine Mehrzahl von ausfahrbaren Baueinheiten (26A, 26B, 26C) aufweist, welche jeweils gegeneinander verschiebbar und ausfahrbar zwischen einer eingefahrenen Position und einer ausgefahrenen Position montiert sind.

11. Pneumatischer Stellantrieb (18; 170; 180) gemäß Anspruch 10, **dadurch gekennzeichnet, dass** eine letzte von den ausfahrbaren Baueinheiten (26C) eine Queröffnung (126) zum Entfernen von Rückständen abgrenzt, welche in der ausgefahrenen Position jeder ausfahrbaren Baueinheit (26A, 26B, 26C) hydraulisch mit der dem ersten inneren Hohlraum (78A) verbunden ist.

12. Pneumatischer Stellantrieb (18; 170; 180) gemäß einem der vorhergehenden Ansprüche, **dadurch gekennzeichnet, dass** die erste ausfahrbare Baueinheit (26A) und die Führungsbuchse (24) auf einer Grundlage des gleichen Materials hergestellt sind.

13. Pneumatischer Stellantrieb (18; 170; 180) gemäß einem der vorhergehenden Ansprüche, **dadurch gekennzeichnet, dass** die Gleitfläche (56) und die Außenfläche der ersten ausfahrbaren Baueinheit (26A) eine Vickers-Härte von mehr als 1000 Vickers aufweisen, vorzugsweise größer oder gleich 1200 Vickers.

14. Verfahren eines Auswurfs einer Ladung (14), welche von einem Luftfahrzeug (10) getragen wird, von einer Art, welche die folgenden Schritte aufweist:
Bereitstellen eines Stellantriebs (18) gemäß einem der vorhergehenden Ansprüche, wobei die erste ausfahrbare Baueinheit (26A) ihre eingefahrene Position einnimmt, und wobei eine Ladung (14) von dem Stellantrieb getragen wird;
Aktivieren der pyrotechnischen Antriebsgasquelle (20), um einen Antriebsgasstrom (20) zu erzeugen;
Einbringen des Antriebsgasstroms in die Führungsbuchse (24) mittels der Eintrittsöffnung (37);
Ableiten mindestens eines Teils des Antriebsgasstroms mittels der Ableitungsmittel (28), um die festen Rückstände, welche im gasförmigen Strom vorhanden sind, gegen die Gleitfläche (56) zu pressen;
Ausfahren der ersten ausfahrbaren Baueinheit (26A) von seiner eingefahrenen Position hin zu seiner ausgefahrenen Position;
Auswerfen der Ladung (14).

15. Verfahren gemäß Anspruch 14, **dadurch gekennzeichnet, dass** es nach dem Ausfahren-Schritt die folgenden Schritte aufweist:
Reinigen der ersten ausfahrbaren Baueinheit (26A) in Richtung zu ihrer eingefahrenen Position, wobei der Schritt des Reinigens ein Abschaben der auf der Gleitfläche (56) vorhandenen festen Rückstände mittels eines Schabevorsprungs (74A) aufweist, welcher durch die erste ausfahrbare Baueinheit (26A) definiert ist;
Hindurchtreten der festen Rückstände durch einen inneren Hohlraum (78A), welcher durch die erste ausfahrbare Baueinheit (26A) definiert ist.

16. Verfahren gemäß Anspruch 15, **dadurch gekennzeichnet, dass** es, nach dem Reinigen-Schritt die folgenden Schritte aufweist:
Zusätzliches Aktivieren der pyrotechnischen Quelle (20) zum Bereitstellen eines Antriebsgasstroms an die erste ausfahrbare Baueinheit (26A);
Übergehen der ersten ausfahrbaren Baueinheit (26A) von ihrer eingefahrenen Position zu ihrer ausgefahrenen Position;
Ausstoßen der festen Rückstände, welche in dem inneren Hohlraum (78A) enthalten sind, in Richtung zur Außenseite des Stellantriebs.

## Claims

1. Pneumatic actuator (18; 170; 180) for ejecting a payload (14) carried by an aircraft (10), comprising
- a guide jacket (24);
- at least one first deployable member (26A) mounted so as to slide along a sliding axis (A-A') on a sliding surface (56) defined in the guide jacket (24), between a retracted position and a deployed position for ejection of the payload, the first deployable member (26A) having an upstream end (85A) applied to the sliding surface (56);
- a pyrotechnic actuation gas source (20) connected to the guide jacket (24) by an inlet opening (37), the pyrotechnic source (20) being activatable in order to introduce, through the inlet opening (37), a flow of actuation gas intended to push the first deployable member to its deployed position;
**characterised in that** the actuator (18) comprises means (28) for deflecting at least part of the gas flow issuing from the inlet opening (37) towards the sliding surface (56) in order to press solids present in the gas flow against the sliding surface (56), the deflection means (28) extending at least partly longitudinally upstream of the upstream end (85A) of the first deployable member (26A) in the deployed position.

2. Actuator (18; 170; 180) according to claim 1, **characterised in that** the first deployable member (26A) comprises a scraping projection (74A), with a cross-section at least partly conjugate with the internal cross-section of the jacket (24), the scraping projection (74A) scraping the sliding surface (56) when the first deployable member (26A) travels back from its deployed position to its retracted position.

3. Actuator (18; 170; 180) according to claim 2, **characterised in that** the guide jacket (24) and the first deployable member (26A) define a first annular space (92A) closed off upstream by the scraping projection (74A) and closed off downstream by an annular stop (52) secured to the guide jacket (24), the volume of the annular space (92A) decreasing as the first deployable member (26A) passes from its retracted position to its deployed position.

4. Actuator (18; 170; 180) according to any one of the preceding claims, **characterised in that** the first deployable member (26A) comprises an annular guide band (86A) attached in the scraping projection (74A), the annular band (86A) advantageously being produced from a solid lubrication material, such as PTFE with a carbon filler, or a metal such as bronze.

5. Actuator (18; 170; 180) according to any one of the preceding claims, **characterised in that** the first deployable member (26A) defines a first internal cavity (78A) receiving the solid residues collected on the sliding surface (56) and a connecting passage (144) connecting the chamber (54) defined by the sliding surface (56) to the first internal cavity (78A).

6. Actuator (18) according to any one of the preceding claims, **characterised in that** the deflection means (28) comprise a deflection projection (142) mounted so as to be able to move conjointly with the first deployable member (26A), the deflection projection (142) having at least one deflection surface directed towards the sliding surface (56).

7. Actuator (170) according to any one of claims 1 to 5, **characterised in that** the deflection means (28) comprise a projection (172) mounted fixedly in the jacket (24), the projection (172) delimiting a plurality of transverse openings for bringing actuation gas emerging opposite the sliding surface (56), the first deployable member (26A) covering at least one first transverse opening in the retracted position, the first transverse opening being uncovered in the deployed position.

8. Actuator (180) according to any one of claims 1 to 5, **characterised in that** the deflection means comprise a plurality of guide pipes (186) emerging in the jacket (26), at least one of the guide pipes (186) having a local axis inclined or perpendicular to the sliding axis (A-A') when it emerges in the jacket (26).

9. Actuator (18) according to any one of claims 1 to 5, **characterised in that** the deflection means (28) comprise a plurality of guide pipes, at least one of the guide pipes having an axis parallel and off-centre with respect to the sliding axis in order to pass the gases closer to the sliding surface.

10. Actuator (18) according to any one of the preceding claims, **characterised in that** it comprises a plurality of deployable members (26A, 26B, 26C) slide mounted and deployable with respect to one another between a retracted position and a deployed position.

11. Actuator (18) according to claim 10, **characterised in that** a last one of the deployable members (26C) delimits a transverse opening (126) for discharging residues, hydraulically connected to the first internal cavity (78A) in the deployed position of each deployable member (26A, 26B, 26C).

12. Actuator (18; 170; 180) according to any one of the preceding claims, **characterised in that** the first deployable member (26A) and the guide jacket (24) are produced from the same material.

13. Actuator (18) according to any one of the preceding claims, **characterised in that** the sliding surface (56) and the external surface of the first deployable member (26A) have a Vickers hardness greater than 1000 Vickers, advantageously greater than or equal to 1200 Vickers.

14. Method for ejecting a payload (14) carried by an aircraft (10), of the type comprising the following steps:
- provision of an actuator (18) according to any one of the preceding claims, the first deployable member (26A) occupying its retracted position, a payload (14) being carried by the actuator;
- activation of the pyrotechnic source (20) of actuation gas for generating a flow of actuation gas;
- introduction of the flow of actuation gas into the guide jacket (24) through the inlet opening (37);
- deflection of at least part of the flow of actuation gas by the deflection means (28) in order to press the solid residues present in the flow of actuation gas against the sliding surface (56);
- deployment of the first deployable member (26A) from its retracted position to its deployed position;
- ejection of the payload (14).

15. Method according to claim 14, **characterised in that** it comprises, after the deployment step, the following steps:
- travel back of the first deployable member (26A) to its retracted position, the travel back step comprising the scraping of the solid residues present on the sliding surface (56) by a scraping projection (74A) defined by the first deployable member (26A);
- passage of the solid residues into an internal cavity (78A) defined by the first deployable member (26A).

16. Method according to claim 15, **characterised in that** it comprises, after the travel back step, the following steps:
- additional activation of the pyrotechnic source (20) in order to generate a flow of actuation gas for the first deployable member (26A);
- passage of the first deployable member (26A) from its retracted position to its deployed position;
- ejection of the solid residues contained in the internal cavity (78A) to the outside of the actuator (18).
